# EUROPEAN PATENT APPLICATION

(11) **EP 1 304 754 A1**
(43) Date of publication of application: **23.04.2003**
(21) Application number: 01947869.2
(22) Date of filing: 05.07.2001
(51) Int. Cl.: H01M 8/02, H01M 8/10, H01M 4/88

(54) **METHOD FOR PRODUCING ELECTROLYTE FILM-ELECTRODE JOINT**

(30) Priority: 06.07.2000 JP 2000204715; 06.07.2000 JP 2000204717
(71) Applicant: MATSUSHITA ELECTRIC INDUSTRIAL CO., LTD., Kadoma-shi, Osaka 571-8501 (JP)
(72) Inventor: UCHIDA, Makoto, Hirakata-shi, Osaka 573-1145 (JP); NIIKURA, Junji, Hirakata-shi, Osaka 573-0157 (JP); GYOTEN, Hisaaki, Shijonawate-shi, Osaka 575-0013 (JP); TAKEBE, Yasuo, Uji-shi, Kyoto 611-0002 (JP); HATOH, Kazuhito, Osaka-shi, Osaka 536-0015 (JP); HOSAKA, Masato, Osaka-shi, Osaka 530-0043 (JP); KANBARA, Teruhisa, Ikeda-shi, Osaka 563-0021 (JP)
(74) Representative: Böckelen, Rainer
(86) International application number: JP0105865
(87) International publication number: WO02005372

(57) **Abstract**

For the purpose of efficiently producing an electrolyte membrane electrode assembly which is excellent in the bond strength between layers and the like, a method for producing an electrolyte membrane electrode assembly is provided which conducts either sequentially or simultaneously the step of injecting an electrolyte ink to form an electrolyte layer and the step of injecting a catalyst layer ink to form a catalyst layer on the electrolyte layer.

## Description

### Technical Field

The present invention relates to a method for producing an electrolyte membrane electrode assembly for use in the polymer electrolyte fuel cells which generates electric power by reacting mainly hydrogen and oxygen with each other.

### Background Art

A fuel cell using a polymer electrolyte electrochemically reacts a fuel gas containing hydrogen with an oxidant gas containing oxygen such as air to generate electric power and heat simultaneously.

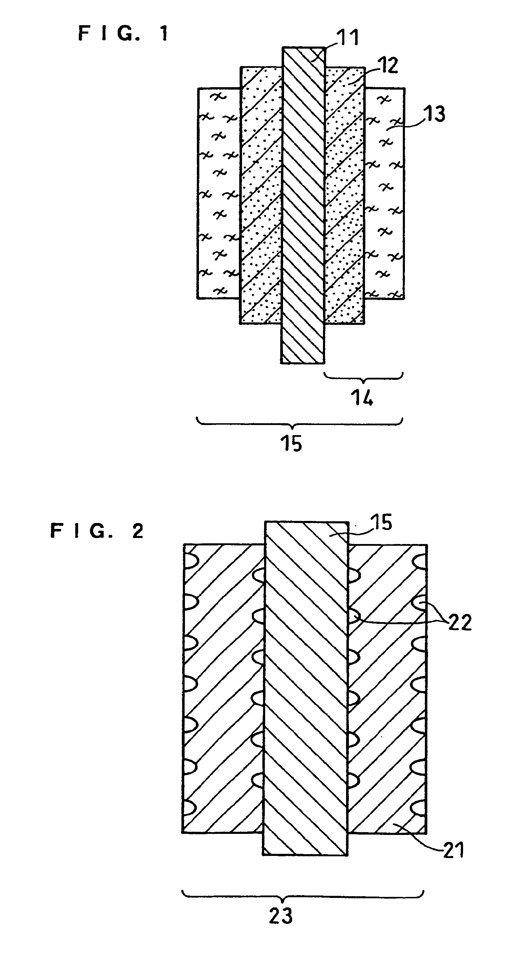

Fig. 1 is a schematic sectional view of an electrolyte membrane electrode assembly (MEA) as a constituent of a polymer electrolyte fuel cell. As shown in Fig. 1, catalyst layers 12 are formed on opposite sides of a polymer electrolyte membrane 11 adapted to transport hydrogen ion selectively. These catalyst layers 12 are formed from a mixture obtained by mixing a hydrogen ion-conductive polymer electrolyte with an electrically-conductive carbon powder carrying a noble metal catalyst. Subsequently, a gas diffusion layer 13 having both fuel gas permeability and electron conductivity is formed on the outer side of each of the catalyst layers 12. Used as the gas diffusion layer 13 is an electrically-conductive carbon paper treated to have water repellency for example. The catalyst layers 12 and the gas diffusion layers 13 form electrodes 14.

Around the electrodes 14 is disposed a seal member such as a gasket in a manner to sandwich the polymer electrolyte membrane in order to prevent supplied fuel gas and oxidant gas from leaking out of the fuel cell or from mixing together. This seal member is previously assembled integrally with the electrodes 14 and the polymer electrolyte membrane 11. In this way, the electrodes 14 and the polymer electrolyte membrane 11 forms a MEA 15. At present, used as such a polymer electrolyte membrane 11 is generally a perfluorocarbon sulfonic acid represented by the formula (1): 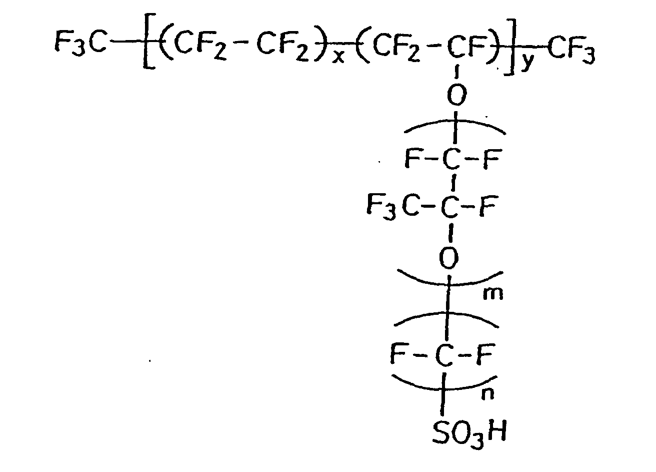 Wherein 5≦x≦13.5, y≒1000, m=1, n=2.

Fig. 2 is a schematic sectional view of a cell utilizing the MEA 15 shown in Fig. 1. As shown in Fig. 2, electrically-conductive separator plates 21 are disposed outside the MEA 15 to fix the MEA 15 mechanically. On the portions of the separator plates 21 contacting the MEA 15, flow paths 22 are formed for supplying gas to the electrodes 14 and for conveying generated gas and excess gas. Though such gas flow paths 22 may be formed into a separate member to be mounted on the separator plates 21, it is a common practice to form the gas flow paths 22 by forming grooves on the surfaces of the separator plates 21.

By fixing the MEA 15 with a pair of separator plates 21 in this way, a cell 23 is obtained. When the fuel gas is supplied to gas flow paths 22 on one side while the oxidant gas is supplied to gas flow paths 22 on the other side, an electromotive force of about 0.8 V can be generated.

However, when a fuel cell is used as a power source, a voltage of from several volts to several hundred volts is needed. For this reason, actually, a required number of such cells 23 are connected in series. At this time, a separator plate 21 formed with gas flow paths 22 on both the obverse and reverse sides thereof, and the separator and the MEA are repeatedly stacked on each other in the order of separator plate/MEA/separator plate/MEA.

To supply the fuel gas or the oxidant gas to gas flow paths 22, it is required that a feed pipe for supplying such a gas be branched into the number equal to the number of separator plates 21 used and be provided with a piping portion for communicating branch ends with respective gas flow paths 22. This piping portion is referred to as a manifold. A manifold for allowing a gas feed pipe to communicate directly with separator plates is referred to as an external manifold. On the other hand, there is an internal manifold having a simpler structure. The internal manifold has a configuration in which a through-hole is provided in the plane of each separator plate formed with gas flow paths, the outlet and inlet ports of each gas flow path is connected to the through-hole for gas, and gas is supplied directly to the through-hole.

A fuel cell generates heat during its operation. The fuel cell needs to be cooled by circulating cooling water so that the temperature condition of the fuel cell is kept satisfactory. Usually, a cooling part for passing through cooling water is inserted between separator plates for every 1 to 3 unit cells. As is often the case with practice, such a cooling part is formed by providing a cooling water flow path on the back side (the side not contacting a gas diffusion layer) of a separator plate.

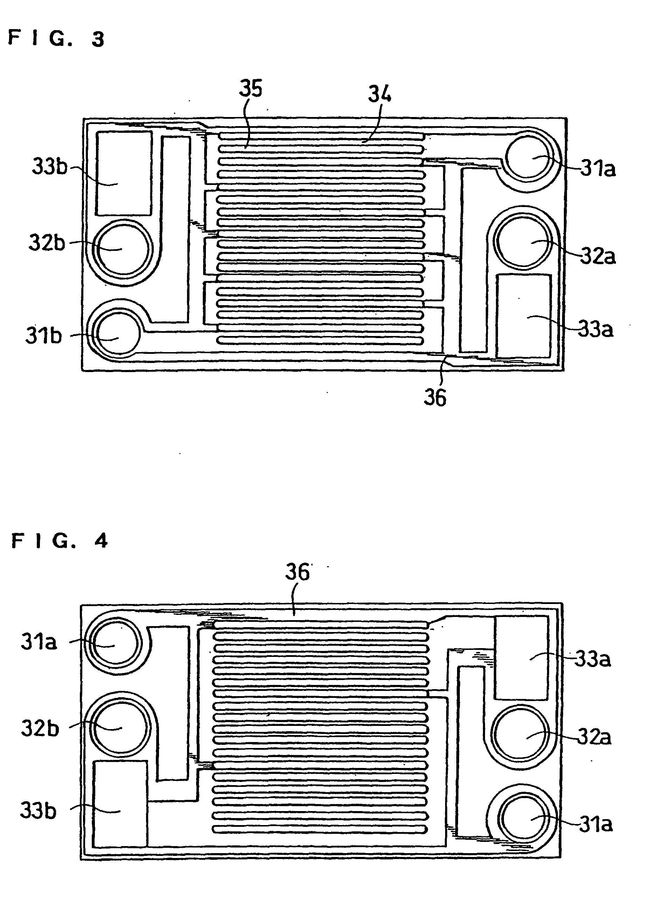

Fig. 3 is a plan view schematically showing the obverse surface structure of the foregoing separator plate 21, while Fig. 4 is a plan view schematically showing the reverse surface structure of the separator plate 21. The obverse surface of the separator plate 21 is formed with flow paths for allowing the fuel gas or the oxidant gas to pass therethrough as shown in Fig. 3, while the reverse surface of the separator plate 21 is formed with flow paths for allowing cooling water to circulate therethrough.

In Fig. 3, the fuel gas is charged from an aperture 31a and discharged from an aperture 31b. The oxidant gas, on the other hand, is charged in from an aperture 32a and discharged from an aperture 32b. Cooling water is charged in from an aperture 33a and discharged from an aperture 33b. The fuel gas charged in from the aperture 31a is guided to the aperture 31b through concave portions 34 defining the gas flow paths while meandering. Convex portions 35, together with the concave portions 34, define the gas flow paths. The fuel gas, oxidant gas and cooling water are sealed with seal member 36.

A separator plate for use in a polymer electrolyte fuel cell is required to have high electrical conductivity and gas-tight property against the fuel gas as well as high resistance to corrosion due to the oxidation-reduction reaction between hydrogen and oxygen, i.e. acid resistance.

For this reason, a conventional separator plate is prepared by a process including cutting to form gas flow paths on the surface of a glassy carbon plate or by a process including filling a binder and expanded graphite into a press mold formed with gas flow path grooves and subjecting them to press molding, followed by heating.

In recent years, attempts have been made to use plates of metals such as stainless steel as separator plate materials instead of conventionally-used carbon materials. A separator plate formed using a metal plate, however, may corrode or dissolve during a long-term use due to exposure to a high-temperature oxidizing atmosphere. When such a metal plate corrodes, there arises a problem that the electrical resistance of the corroded portion increases thereby lowering the power output of the cell.

Alternatively, when the metal plate dissolves, metal ions resulting from dissolution are diffused within a polymer electrolyte and trapped by ion-exchange sites of the polymer electrolyte, with the result that the ion-conductivity of the polymer electrolyte itself is lowered. To avoid such deteriorations, it is a common practice to plate such a metal plate with gold to a certain thickness.

Further, a study is being made to form a separator plate from an electrically-conductive resin obtained by mixing an epoxy resin and a metal powder together.

The MEA, separator plate and cooling part as described above are alternately stacked to form a stack of 10 to 200 unit cells, and the stack in turn is sandwiched between end plates through collector plates and insulating plates. Then, the end plates, collector plates, insulating plates and the stack are secured together by means of fastening bolts to give a fuel cell stack.

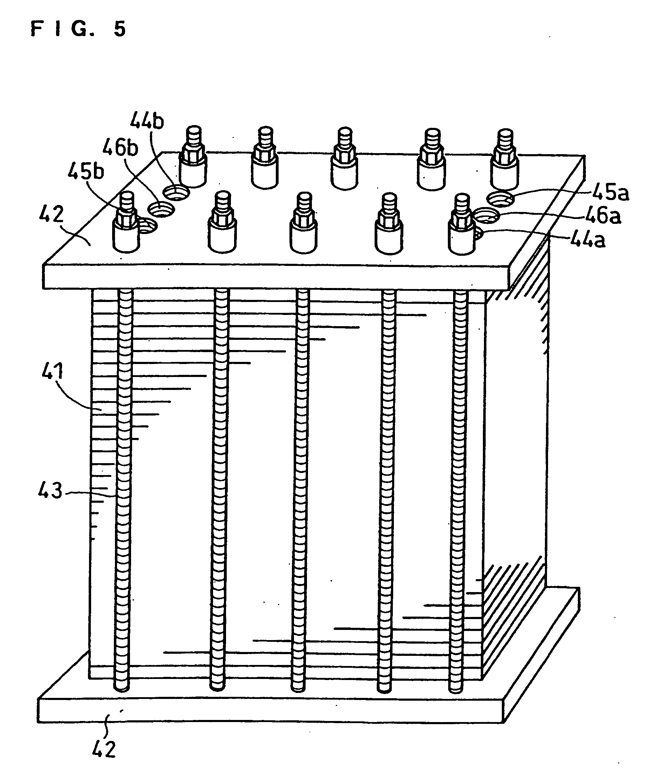

Fig. 5 is a schematic perspective view of a fuel cell stack as referred to herein. In the fuel cell stack shown in Fig. 5, a required number of unit cells 41 are stacked to form a stack, which is sandwiched between two end plates 42 and fastened with a plurality of fastening bolts 43. Here, the end plates 42 are formed with an aperture 44a for charging the oxidant gas, an aperture 45a for charging the fuel gas and an aperture 46a for charging cooling water. On the other hand, an aperture 44b for discharging the oxidant gas, an aperture 45b for discharging the fuel gas and an aperture 46b for discharging cooling water are also formed.

As is often the case with conventional MEAs, if the electrolyte membrane formed of the perfluorocarbon sulfonic acid becomes so thin that the mechanical strength thereof lowers, the electrolyte membrane is broken or formed with pinholes during the manufacture of a MEA or during the operation of the fuel cell. For this reason, the lower limit of the thickness of such an electrolyte membrane is about 20 to 30 im. Though it has been attempted to reinforce or maintain the mechanical strength of a thinner electrolyte membrane with a reinforcing mesh, reinforcing core material or the like, problems arising in this case are lowered ion conductivity of the electrolyte membrane, increased cost and the like. Further, problems associated with both the performance and the durability are involved such that voids are generated at the interface between the electrolyte membrane and the catalyst layer, that these two components peel off each other, or the like.

In recent years, a method has been proposed of applying onto a tape-shaped substrate a catalyst layer ink and an ink having other functionality (diffusion property for example) in a multi-layered manner for the purpose of improving the gas-diffusing ability and the hydrogen ion conductivity for mass productivity of MEAs for fuel cells and the thinning of the catalyst layer, diffusion layer and the like. The following process is employed to apply onto the substrate the catalyst layer ink and at least one kind of ink other than the catalyst layer ink in a multi-layered manner. For example, first, the catalyst layer ink is applied onto the substrate and then dried to form a catalyst layer. Likewise, a second ink is applied to overlie the catalyst layer and then dried to form a second layer. Further, still another ink or a third ink is applied to overlie the second layer and then dried to a third layer. Subsequently, an adhesive is applied to overlie the third layer and then dried to fix the catalyst layer, second layer and third layer.

Such a prior art method, however, involves the following problems. That is, since the catalyst ink and other inks are applied and dried individually, the production method is inferior in application efficiency. In particular, there arises a problem that the number of application steps increases with increasing number of inks to be applied and increasing number of layers. Further, since the catalyst layer and other layers are formed sequentially and individually, the interface of each layer is distinctively separate from that of adjacent one and, hence, it is difficult for these layers to adhere to each other sufficiently.

The present invention has been made in view of the foregoing circumstances, and it is an object of the present invention to provide a method for producing an electrolyte membrane electrode assembly (MEA) for use in a fuel cell, which is capable of efficiently applying plural kinds of inks in a multi-layered manner simply and easily.

### Disclosure of Invention

The present invention is directed to a method for producing an electrolyte membrane electrode assembly comprising a hydrogen ion-conductive polymer electrolyte layer and a pair of electrode layers having respective catalyst layers facing opposite sides of said hydrogen ion-conductive polymer electrolyte layer, said method comprising the steps of: (1) injecting an electrolyte ink comprising a dispersion containing a hydrogen ion-conductive polymer electrolyte or a melt liquid of a hydrogen ion-conductive polymer electrolyte to form an electrolyte layer; (2) injecting a catalyst layer ink to form a catalyst layer on said electrolyte layer; and (3) forming a diffusion layer on said catalyst layer, at least said step (1) and said step (2) being conducted sequentially or simultaneously.

In the production method described above, it is effective that said step (1) and said step (2) are conducted sequentially or simultaneously to inject and apply said electrolyte ink and said catalyst layer ink in a multi-layered manner.

It is particularly effective that said electrolyte ink and said catalyst layer ink are simultaneously injected in a multi-layered manner from a slit-shaped injection orifice, while said substrate is advanced in a direction perpendicular to a longitudinal direction of said slit-shaped injection orifice.

Also, it is effective that said step (3) is the step of injecting a diffusion layer ink on said catalyst layer to form the diffusion layer.

In this case, it is effective that said electrolyte ink, said catalyst layer ink and said diffusion layer ink are simultaneously injected in a multi-layered manner from a slit-shaped injection orifice, while said substrate is advanced in a direction perpendicular to a longitudinal direction of said slit-shaped injection orifice. By so doing, it is possible to conduct said steps (1) to (3) simultaneously.

Also, it is effective that said step (3) is the step of forming the diffusion layer on said catalyst layer by hot pressing.

Further, it is effective that said production method includes the step of baking an assembly of the electrolyte membrane and the catalyst layer obtained in said step (2) at a temperature not lower than 100°C.

Furthermore, the present invention is directed to a method for producing an electrolyte membrane electrode assembly comprising a hydrogen ion-conductive polymer electrolyte layer and a pair of electrode layers having respective catalyst layers facing opposite sides of said hydrogen ion-conductive polymer electrolyte layer, said method comprising the steps of: (a) forming a catalyst layer containing a hydrogen ion-conductive polymer electrolyte on a substrate constituting an electrolyte layer; and (b) impregnating an assembly of the electrolyte membrane and the catalyst layer obtained in the step (a) with a dispersion or solution containing a hydrogen ion-conductive polymer electrolyte or a melt liquid of a hydrogen ion-conductive polymer electrolyte.

It is effective that this production method includes the step of baking an assembly of the substrate and the catalyst layer at a temperature not lower than 100°C after said step (b).

### Brief Description of Drawings

Fig. 1 is a schematic sectional view showing an electrolyte membrane electrode assembly (MEA) constituting a polymer electrolyte fuel cell.
Fig. 2 is a schematic sectional view showing a cell in which MEA 15 shown in Fig. 1 is used.
Fig. 3 is a plan view schematically showing the obverse side structure of a separator plate.
Fig. 4 is a plan view schematically showing the reverse side structure of the separator plate.
Fig. 5 is a schematic perspective view showing a fuel cell stack.
Fig. 6 is an illustration for explaining a method of producing a MEA in example 1.
Fig. 7 is a diagram showing the I-V characteristic of a conventional fuel cell.
Fig. 8 is a diagram showing the air dew point dependence of the voltage of a conventional fuel cell and that of a fuel cell according to example 2.
Fig. 9 is a view showing the schematic configuration of a multi-layer applicator for carrying out the present invention.
Fig. 10 is a view showing an applicator equipped with application heads for respective inks such as a catalyst layer ink and a diffusion layer ink.
Fig. 11 is a view showing the schematic configuration of another multi-layer applicator for carrying out the present invention.
Fig. 12 is a view conceptually showing the structure of a flow path 308 in the multi-layer applicator shown in Fig. 11.
Fig. 13 is a schematic sectional view of a MEA obtained using the multi-layer applicator shown in Fig. 11.
Fig. 14 is a diagram showing the discharge characteristics of respective fuel cells according to examples 3 to 5 and a comparative example.

### Best Mode for Carrying Out the Invention

The present invention is directed to a method for producing an electrolyte membrane electrode assembly (MEA) comprising a hydrogen ion-conductive polymer electrolyte layer and a pair of electrode layers having respective catalyst layers facing opposite sides of the hydrogen ion-conductive polymer electrolyte layer, the method comprising the steps of: (1) injecting an electrolyte ink comprising a dispersion containing a hydrogen ion-conductive polymer electrolyte or a melt liquid of a hydrogen ion-conductive polymer electrolyte to form an electrolyte layer; (2) injecting a catalyst layer ink to form a catalyst layer on the electrolyte layer; and (3) forming a diffusion layer on the catalyst layer, at least the step (1) and the step (2) being conducted sequentially or simultaneously.

Specifically, the present invention is directed to a method for producing a polymer electrolyte fuel cell comprising at least a MEA comprising a hydrogen ion-conductive polymer electrolyte layer and a pair of electrode layers having respective catalyst layers disposed to face opposite sides of the hydrogen ion-conductive polymer electrolyte layer, means to supply gas to and discharge gas from the electrode layers, and means to take electric current out of the MEA, the method being characterized that: the hydrogen ion-conductive polymer electrolyte layer is formed by casting of a dispersion or solution containing a hydrogen ion-conductive polymer electrolyte or of a melt liquid of a hydrogen ion-conductive polymer electrolyte; the catalyst layer is formed by casting of a liquid containing constituent materials of the catalyst layer; and the formation of the catalyst layer by casting and the formation of the hydrogen ion-conductive polymer electrolyte layer by casting are conducted sequentially.

In the production method described above, it is effective that the injection direction of the electrolyte ink and the catalyst layer ink is perpendicular to the advancing direction of the substrate.

Further, it is effective that the step (1) and the step (2) are conducted sequentially or simultaneously to inject and apply the electrolyte ink and the catalyst layer ink in a multi-layered manner.

Particularly, it is preferable that the electrolyte ink and the catalyst layer ink are simultaneously injected in a multi-layered manner from a slit-shaped injection orifice, while the substrate is advanced in a direction perpendicular to the longitudinal direction of the slit-shaped injection orifice.

That is, the production method of the present invention includes the step of applying a catalyst layer ink containing a catalyst metal, a carbon fine powder and a polymer electrolyte and at least one kind of other ink on a substrate in a multi-layered manner, for example, and is characterized that: a slit-shaped injection orifice for injecting the catalyst layer ink and the other ink is positioned so that the longitudinal direction of the injection orifice is perpendicular to the advancing direction of the substrate; and the catalyst ink and the other ink, which have been charged, are injected in a multi-layered manner from the injection orifice so that the catalyst ink and the other ink are applied on the substrate in a multi-layered manner.

Stated otherwise, at least two kinds of inks charged into a nozzle of an applicator move within the nozzle, while forming respective layers relative and, then, injected as layered on each other from the slit-shaped injection orifice (opening) of the nozzle. In the case where the layers of respective inks are injected as layered on each other in parallel to the longitudinal direction of the slit-shaped injection orifice, it is preferable that the substrate to be applied with the inks is advanced in a direction perpendicular to the longitudinal direction of the slit-shaped injection orifice. This feature will be described specifically in the following Examples.

The term "other ink", as referred to herein, is meant to include an electrolyte ink comprising a dispersion containing a hydrogen ion-conductive polymer electrolyte or a melt liquid of a hydrogen ion-conductive polymer electrolyte, a diffusion layer ink constituting a gas diffusion layer of an electrode of a MEA, and the like.

At this time, a charging port for charging the catalyst ink and at least one kind of other ink into the applicator is positioned so that the direction in which the inks are charged into the applicator becomes perpendicular to the direction in which the inks are charged into the nozzle. It is preferable that: two or more kinds of the inks arranged in a row are charged into the charging port of the applicator and/or the charging port of the nozzle (internal charging port); and the inks thus charged are injected in a multi-layered manner to form a catalyst layer and a layers of other ink.

More specifically, the applicator used in the present invention is preferably equipped with a plurality of application heads each having a single nozzle or a single application head having a plurality of nozzles for injecting two or more kinds of inks from the injection orifices of respective nozzles to achieve multi-layer application. The use of such an applicator makes it possible to simplify considerably the process because there is no need to form each layer individually.

Though specific description is made later, particularly, two or more kinds of inks arranged in a row are charged into nozzles and then caused to flow within the applicator toward the injection orifice, which is positioned as twisted substantially perpendicularly to the internal charging ports in communication with the nozzles and, at the same time, the sectional shape of the whole flowing inks is changed to meet the shape of the injection orifice. The two or more kinds of inks reaching the orifice are injected in a multi-layered state from the injection orifice. With this multi-layered two or more kinds of inks, multi-layer application is made onto the substrate. The integration of the application head as described above makes it possible to reduce the equipment cost. Further, the inks constituting adjacent layers subtly mix with each other to enlarge the bonding interface between the adjacent layers and, hence, it is possible to reduce the contact resistance between the layers and improve the adhesion therebetween.

In forming the diffusion layer in the step (3), the diffusion layer may be formed by injecting the diffusion layer ink onto the catalyst layer or by performing hot pressing on the catalyst layer. In the latter case, in particular, a diffusion layer previously formed into a layer such as carbon paper may be used.

In the case where the diffusion layer is formed by injecting the diffusion layer ink onto the catalyst layer, it is possible to conduct the steps (a) to (c) either sequentially or simultaneously with use of the electrolyte ink, catalyst layer ink and diffusion layer ink to form the electrolyte layer, catalyst layer and diffusion layer in a multi-layered manner.

That is, the use of an ink for a polymer electrolyte layer as one of the inks allows the step of forming a polymer electrolyte membrane to be integrated with the step of forming a MEA. This makes it possible to simplify the process considerably because a strength and a special process for forming a polymer electrolyte membrane are not needed.

It is to be noted that if a polymer electrolyte membrane previously formed as the substrate is used, it is possible to apply at least the catalyst layer ink and the diffusion layer ink in a multi-layered manner directly onto one or both of the opposite sides of the electrolyte membrane, thereby producing a MEA.

On the other hand, the present invention is also directed to a method for producing an electrolyte membrane electrode assembly comprising a hydrogen ion-conductive polymer electrolyte layer and a pair of electrode layers having respective catalyst layers facing opposite sides of the hydrogen ion-conductive polymer electrolyte layer, the method comprising the steps of: (a) forming a catalyst layer containing a hydrogen ion-conductive polymer electrolyte on a substrate forming an electrolyte layer; and (b) impregnating an assembly of the electrolyte membrane and the catalyst layer obtained in the step (a) with a dispersion or solution containing a hydrogen ion-conductive polymer electrolyte or a melt liquid of a hydrogen ion-conductive polymer electrolyte.

It is effective that this production method includes the step of baking an assembly of the substrate and the catalyst layer at a temperature not lower than 100°C after the step (b).

In the followings, the present invention will be described more specifically by way of examples, which are not construed to limit the present invention.

### Example 1

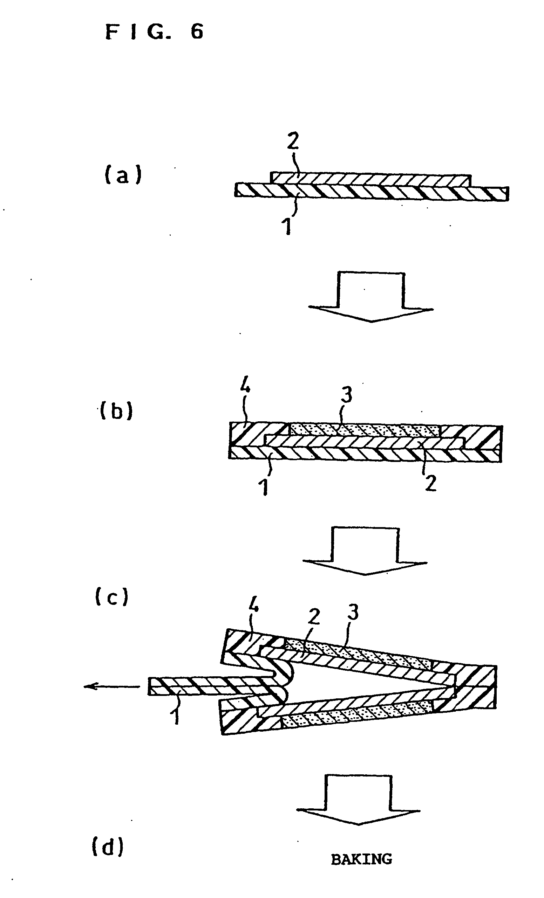

As shown in Fig. 6(a), an alcohol solution of 10 wt% PFSI (perfluorocarbon sulfonic acid ionomer) was applied onto a PET (polyethylene terephthalate) film 1 having a thickness of 100 microns and, then, dried to give an electrolyte membrane 2 as a casted film having a thickness of about 5 microns. The thickness of this electrolyte membrane 2 was adjustable within the range of from 2 to 35 im in average by varying the concentration of the alcohol solution of PFSI or the application conditions. The PET film 1 was previously applied with a fluorine-type release agent or a silicon-type release agent.

A catalyst layer was formed as follows. A platinum carbon powder (Pt/C powder) carrying 25 wt% Pt on acetylene black having a specific surface area of 100 m²/g was provided, and this power was mixed with an alcohol solution of PFSI to prepare a catalyst layer ink. At this time, the weight of PFSI and that of carbon were adjusted to become substantially equal to each other.

As shown in Fig. 6(b), film casting was performed using the catalyst layer ink on a central portion of the electrolyte membrane 2 (5 im or less) formed on the PET film 1. The catalyst layer 3 having been dried had a size of 5 cm × 5 cm × about 15 im, and the amount of Pt was 0.3 mg/cm².

The composite of PET film 1-electrolyte membrane 2-catalyst layer 3 thus formed was cut so that 2 cm of the electrolyte membrane was left on the periphery of the catalyst layer 3. As shown in Fig. 6 (c), PET films 1 were peeled off from two such composites of PET film 1-electrolyte membrane 2-catalyst layer 3 thus cut and, at the same time, the composites were bonded to each other so that their respective electrolyte membrane 2 sides were joined with each other. Their respective catalyst layers 3 were positioned to lie upon each other to give a composite of catalyst layer 3-electrolyte membrane 2-electrolyte membrane 2-catalyst layer 3 (not shown). At this time, a jig was provided to avoid the tearing of the electrolyte membranes 2 from the time of peeling the PET films 1 up to the time of bonding the composites.

Finally, carbon paper (thickness: 270 im) serving as a gas diffusion layer was cut to substantially the same size as the catalyst layer 3 and then hot-pressed onto the opposite sides of the composite of catalyst layer 3-electrolyte membrane 2-electrolyte membrane 2-catalyst layer 3. At the time of the hot pressing, a gas seal member 4 was disposed and bonded around each of the gas diffusion layers as shown in Fig. 6(c), to form a MEA.

Silicone rubber was used as the gas seal member. The MEA thus completed was subjected to baking (heat treatment) at 130°C for 10 minutes. Examination was made of a baking atmosphere under a dry condition and a baking atmosphere in the presence of water vapor. It was found that a baking temperature of 100 to 160°C was suitable and that the presence of water vapor in the baking atmosphere was desirable.

Besides the method (a) of providing the gas seal member 4 at the final step of MEA production, a method (b) was tested in which a seal member is formed at the stage before the peeling of the PET film 1 as the substrate. Also, a method (c) was examined in which a seal member is formed around an electrolyte membrane after the film casting of the electrolyte membrane and, then, a catalyst layer is formed. No significant difference in performance was recognized among cells obtained by these methods.

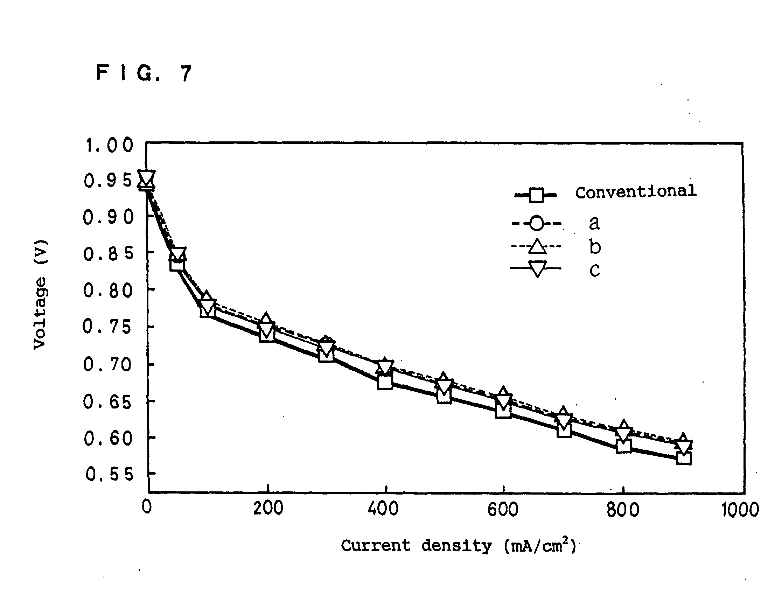

The I-V characteristic of a conventional cell and that of a cell using a MEA obtained by each of the methods (a) to (c) were shown in Fig. 7. Here, pure hydrogen gas and air, respectively, were supplied to the fuel electrode and the air electrode of a cell, and the cell temperature, fuel gas utilization factor (U_{f}) and air utilization factor (Uₒ) were set to 75°C, 70% and 40%, respectively. The fuel gas was humidified by passing it through warm water at 65°C, while air was humidified by passing it through warm water at 60°C. The foregoing conventional cell was produced in the same manner as with the cell using the MEA obtained by the foregoing method (a) except that a commercially-available electrolyte membrane having a thickness of 30 im was used. As seen from Fig. 7, it has been found that the cells according to the present invention exhibited improved performance. When the dew point of the supplied air was 30°C, the voltage of each of the cells according to this example was 50 mV higher than that of the conventional cell (when the current density was 0.7 A/cm²). Presumably, this was because water generated on the air electrode side became easier to move toward the fuel electrode side by reverse diffusion as the electrolyte membrane was made thinner, thereby inhibiting drying on the fuel electrode side.

Further, as a durability evaluation test, a continuous operation test of the fuel cells was conducted in a mode such as to provide a pressure difference between the air side and the hydrogen side by feeding excess air for 5 seconds per minute. The cells each had a durability equivalent to that of the conventional cell, and the amount of cross-leaked hydrogen gas of each cell after lapse of 500 hours was the same as that of the conventional cell.

From the fact that, despite the use of the electrolyte membrane as thin as 10 im, the cells used in this example exhibited a cross leakage deterioration property comparable to that of the conventional cell using the 30 im-thick electrolyte membrane, the production method of the present invention was proved to compensate for a decrease in mechanical strength due to the thinning of the membrane.

Though this example used the alcohol solution of PFSI in the casting of the electrolyte membrane, it was possible to use a melt liquid of PFDI or the precursor thereof.

While the catalyst layer was formed after the casting of the electrolyte membrane in the above description, a method was then tested in which an electrolyte membrane was formed after the formation of a catalyst layer. Specifically, a catalyst layer was first formed on a PET film by casting, and, then, an electrolyte membrane was formed by casting, followed by forming another catalyst layer by casting. The resulting composite of catalyst layer-electrolyte membrane-catalyst layer was provided with gas seal members around electrode portions thereof and, then, hot-pressed with gas diffusion layers from the opposite sides thereof to produce a MEA. According to a test for a cell using the MEA thus obtained, a result somewhat superior as compared to the cells was obtained by the methods (a), (b) and (c).

The performance of any one of the cells according to this example was improved because, conceivably, the electrolyte membrane could be made thin and, in addition thereto, the bond between the electrolyte contained in the catalyst layer and the electrolyte membrane was improved.

Therefore, it was critical that after the formation of one layer by casting, the next layer was formed directly thereon by casting without baking.

Further, when the cells having undergone the test were disassembled and checked, it was found that the layers forming the MEA of each cell according to the present invention were bonded to each other relatively securely, whereas the catalyst layer of the MEA of the conventional cell was easy to peel off. In addition, the amount of the electrolyte used was reduced as the electrolyte membrane became as thin as 5 to 10 im and, hence, it was possible to reduce the material cost for the electrolyte membrane.

### Example 2

A stretched PTFE film having a thickness of about 5 im was provided as a reinforcing core sheet serving as a substrate constituting an electrolyte layer. This film was obtained by biaxially stretching a 15 im-thick stretched PTFE film.

To a platinum carbon powder (Pt/C powder) carrying 25 wt% Pt on acetylene black having a specific surface area of 100 m²/g was added an appropriate amount of ethyl alcohol, and the resulting mixture was stirred with a planetary ball mill to prepare a catalyst layer ink free of any electrolyte.

A central region of 5 cm × 5 cm on each of the opposite sides of the above stretched PTFE film having a thickness of about 5 im was printed with the catalyst layer ink by screen printing. The resulting composite of catalyst layer-substrate-catalyst layer was pressed (at 5 kgf/cm²) from its obverse and reverse sides in order to prevent the catalyst layers from dropping and to enhance the electrical contact between Pt/C particles. It was found here that the addition of an electrolyte in an amount of about 10 wt% to the catalyst layer ink made it possible to prevent dropping of a resulting catalyst layer.

After the formation of a seal member composed of silicone rubber around each catalyst layer by injection molding, the composite was impregnated with an alcoholic-aqueous solution of 10 wt% PFSI under vacuum. After sufficient impregnation with PFSI, an excess of the PFSI solution trapped in the catalyst layers was removed by means of a centrifugal hydroextractor. After having dried the composite, the impregnation under vacuum and the hydroextractor treatment were repeated three times to give a MEA.

By virtue of the impregnating balance of the solution determined by the microstructures (micropore diameter and surface contact angle) of the substrate and the catalyst layer, the electrolyte was filled densely and continuously in the centrally situated substrate portion with the catalyst layers formed with a multiplicity of moderate micropores by adjusting the concentration of the PFSI solution, impregnating conditions and the hydroextractor conditions. This means that the substrate was converted into an electrolyte layer.

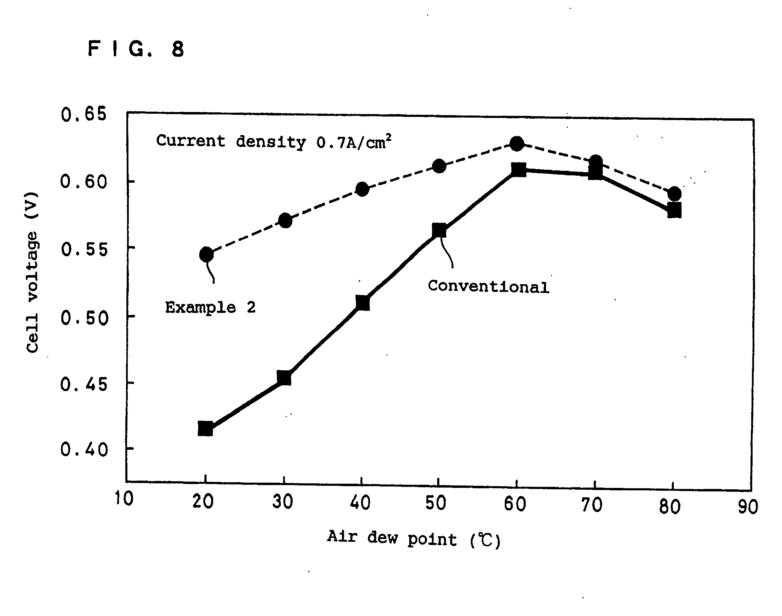

The MEA was baked under a humidifying condition at 130°C in the same manner as in example 1, and thereafter a cell using the MEA was produced, followed by testing. The air dew point dependences (current density: 0.7 A/cm²) of the voltage of the conventional cell and that of the cell according to Example 2 were shown in Fig. 8. It was found that the cell performance at a low dew point was considerably improved as compared with the conventional cell. Presumably. this was because reverse diffusion of water generated on the air electrode side toward the fuel electrode side was facilitated by the thickness of the electrolyte membrane decreased as thin as about 5 im.

While Example 2 used the stretched PTFE film, as it was, as the reinforcing core material constituting the electrolyte membrane portion, it was also possible to render such a stretched PTFE film hydrophilic at the surface thereof using hydrofluoric acid or a hydrophilicity-imparting agent, thereby facilitating the retention and impregnation of a solution containing PFSI. Besides such a stretched PTFE film, it is possible to use as the reinforcing core material a material that is electrically non-conductive, chemically stable with respect to any electrolyte and has a large specific surface area to be impregnated with a solution containing PFSI, such as anti-corrosive ceramic short fibers.

### Examples 3 and 4

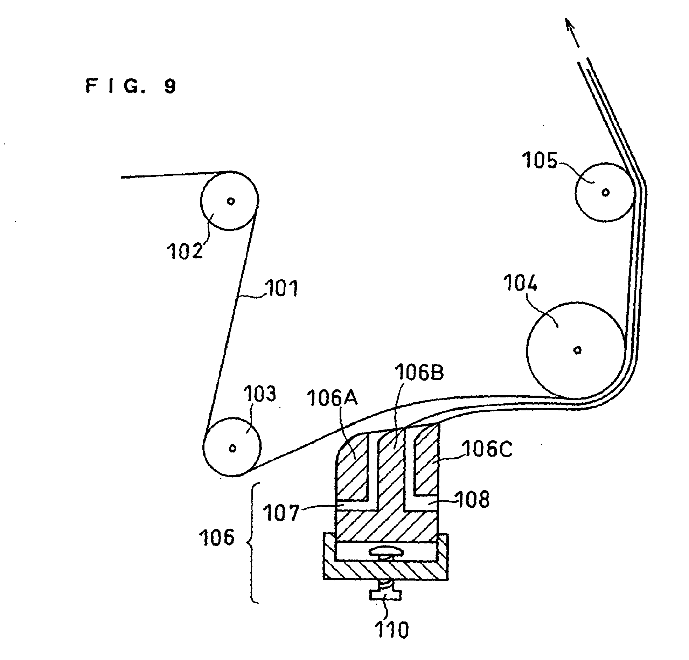

Fig. 9 is a view showing the schematic configuration of a multi-layer applicator for carrying out the present invention. A substrate 101 is continuously fed through a guide roll 102, support rolls 103 and 104 and a guide roll 105 and led to a subsequent process. If necessary, the substrate 101 is led to, for example, a drying process and a transfer process. The substrate 101 is to carry an ink as it is and is composed of, for example, paper, cloth, resin such as polypropylene (PP) or polyethylene terephthalate (PET), or a polymer electrolyte membrane.

Between the support rolls 103 and 104, an application head 106 is pressed against the surface of the substrate 101, and depending on the degree of this pressing force, the tension of the substrate 101 at a portion to be applied is determined. The determination of the tension can be achieved by adjusting the distance between the application head 106 and the substrate 101 from behind the application head 106 by means of a screw 110, for example.

The application head 106 has a first nozzle 107 and a second nozzle 108 for supplying, for example, two kinds of inks, respectively. It should be noted that though these examples describe the case where two kinds of inks are used, the present invention is not limited to this case and allows the use of a plurality of inks for a multi-layer application regardless of whether they are same or different in kind. The application head 106 has a front edge 106A, a center edge 106B and a back edge 106C, and slits 107 and 108 between these edges are supplied with, for example, a catalyst layer ink and a diffusion layer ink, respectively.

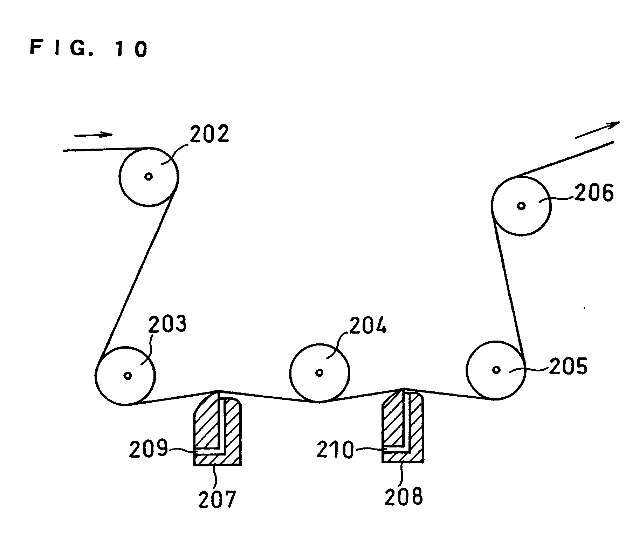

On the other hand, Fig. 10 is a view showing an applicator equipped with application heads for respective inks such as a catalyst layer ink and a diffusion layer ink. A substrate 201 is continuously fed through a guide roll 202, support rolls 203, 204 and 205 and a guide roll 206 and led to a subsequent process. If necessary, the substrate 201 is led to, for example, a drying process and a transfer process. Between the support rolls 203, 204 and 205, application heads 207 and 208 are pressed against the surface of the substrate 201, and depending on the degree of this pressing force, the tension of the substrate 201 at a portion to be applied is determined. Slits (nozzles) 209 and 210 of respective application heads are supplied with the catalyst layer ink and the diffusion layer ink, respectively.

Multi-layer application was made on substrates with the use of the aforementioned applicators according to Examples 3 and 4 under the following conditions and, as a result, multi-layer application with favorable interfaces of layers could be achieved.

Catalyst layer ink for positive electrode: a mixture comprising a catalyst carrying 50 wt% Pt on KETJEN BLACK EC that is a fine carbon powder produced by LION CORPORATION, an ethanol solution of perfluorocarbon sulfonic acid ionomer produced by Asahi Glass Co., Ltd., and 10 wt% of water.

Diffusion layer ink for positive electrode: a mixture comprising DENKA BLACK (acetylene black) produced by DENKI KAGAKU KOGYO KABUSHIKI KAISHA and LUBLON LDW-40 (PTFE dispersion, dry weight: 20 wt%) produced by DAIKIN INDUSTRIES, LTD.

Catalyst layer ink for negative electrode: a mixture comprising a catalyst carrying 40 wt% Pt and 20 wt% Ru on KETJEN BLACK EC that is a fine carbon powder produced by LION CORPORATION, an ethanol solution of perfluorocarbon sulfonic acid ionomer produced by Asahi Glass Co., Ltd., and 10 wt% of water.

Diffusion layer ink for negative electrode: a mixture comprising DENKA BLACK (acetylene black) produced by DENKI KAGAKU KOGYO KABUSHIKI KAISHA and LUBLON LDW-40 (PTFE dispersion, dry weight: 20 wt%) produced by DAIKIN INDUSTROES, LTD.

### Example 5

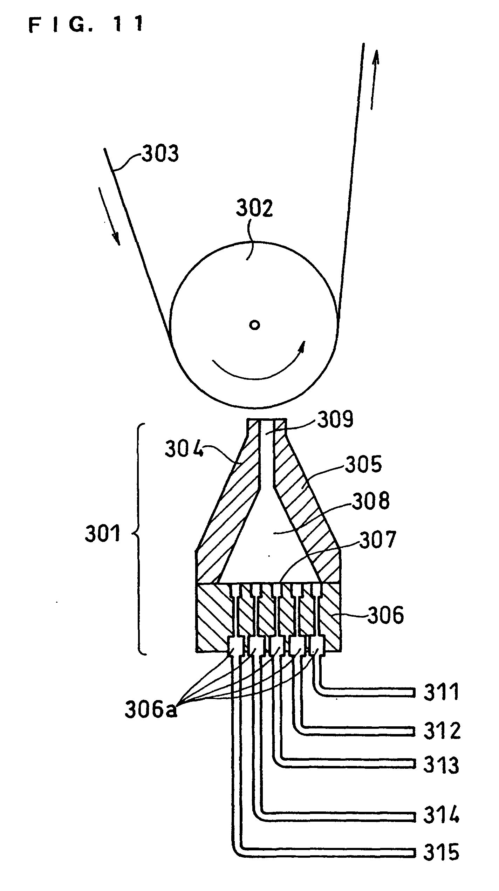

Fig. 11 is a view showing the configuration of a multi-layer applicator for carrying out the present invention. This multi-layer applicator comprises a backup roll 302 conveying a substrate 303 to be subjected to multi-layer application while supporting the reverse side thereof, an application head 301 disposed to face the backup roll 302, and charging ports 311 to 315 for charging, for example, five kinds of inks to the application head 301. It should be noted that though this example describes the case where five kinds of inks are used, the present invention is not limited to this case as noted above.

The substrate 303 is the same as described in Examples 3 and 4, and a substrate-conveying mechanism such as a motor (not shown) is provided at one end of the substrate 303, the substrate 303 being conveyed in the direction indicated by arrow in Fig. 11 by the operation of the substrate-conveying mechanism. After having been subjected to multi-layer application by the application head 301 to be described later, the substrate 303 in a state carrying the inks thereon is conveyed to a drying process and a transfer process, for example.

The backup roll 302, which is rotatable by means of bearings (not shown) or the like, rotates in the direction of arrow as the substrate 303 is conveyed and supports the reverse side of the substrate 303 in such a manner to keep constant the spacing between the face to be applied of the substrate 303 and an injection orifice 309 of the application head 301.

The application head 301 is disposed so that the longitudinal direction of the slit-shaped injection orifice 309, which is disposed on the side facing the backup roll 302, becomes perpendicular to the advancing direction of the substrate 303, and injects the five kinds of inks, which have been charged as arranged in a row through an internal charging port 307, from the injection orifice 309 in a multi-layered manner, thereby achieving multi-layer application onto the substrate 301.

Description is made of the structure of the application head 301 according to this example. The application head 301 comprises an upstream-side die 304 positioned upstream in the advancing direction of the substrate 303, a downstream-side die 305 positioned downstream in the advancing direction of the substrate 303, and a coupling member 306 coupling these dies.

The coupling member 306 is formed with a coupling portion 306a for coupling a row of five supply pipes in communication with respective ink charging ports 311 to 315 to be described later. This coupling portion 306a is formed with a row of five apertures for the coupling and connection of the five supply pipes.

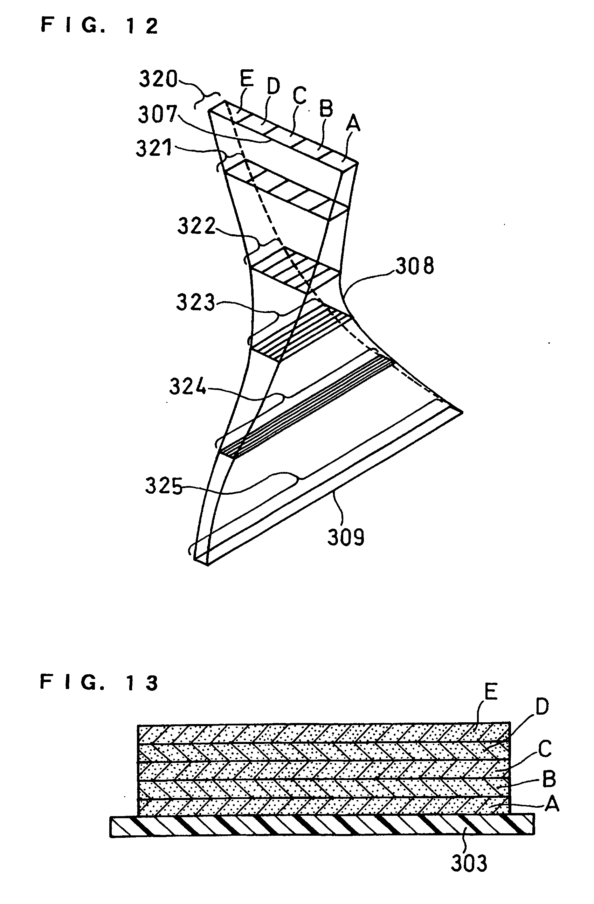

The internal charging port 307 has an area substantially equal to that of the injection orifice 309 and is shaped rectangular with a slightly larger width for easy charging of the five kinds of inks. Further, a flow path 308 is formed in the space connecting the internal charging port 307 to the injection orifice 309 for communication. Fig. 12 is a view conceptually illustrating the structure of the flow path 308.

As shown in Fig. 12, the internal charging port 307 is positioned as twisted at substantially a right angle from the injection orifice 309 so that the longitudinal direction of the internal charging port 307 becomes perpendicular to the longitudinal direction of the slit-shaped injection orifice 309. The flow path 308 is formed so that the shorter sides of the internal charging port 307 connects to the longer sides of the injection orifice 309, while the longer sides of the internal charging port 307 connects to the shorter sides of the injection orifice 309. Further, the flow path 308 is formed so as to have substantially equal sectional areas in any sections. That is, the shape of the internal charging port 307 continuously changes into the shape of the injection orifice 309 while changing the length-to-width ratio thereof without changing its sectional area.

The application head 301 thus constructed is disposed to face the backup roll 302 so that the longitudinal direction of the slit-shaped injection orifice 309 becomes perpendicular to the advancing direction of the substrate 303.

The first to fifth charging ports 311 to 315, respectively, supply different kinds of inks to the application head 301. For example, an ink A to be supplied from the first charging port 311 is a diffusion layer ink for positive electrode, while an ink B to be supplied from the second charging port 312 is a catalyst layer ink for positive electrode. Further, an ink C to be supplied from the third charging port 313 is an electrolyte ink, while an ink D to be supplied from the fourth charging port 314 is a catalyst layer ink for negative electrode. Furthermore, an ink E to be supplied from the fifth charging port 315 is a diffusion layer ink for negative electrode. In this way, the ink charging ports 311 to 315 supply to the substrate 301 respective inks required in producing a membrane electrode assembly with functionality according to the purpose.

The supply pipes for feeding inks A to E supplied from the respective ink charging ports 311 to 315 to the application head 301 are communicated with and connected to the coupling portion 306a for the supply pipe of the coupling member 306 of the application head 301.

A series of operations of the multi-layer applicator equipped with the application head 301 are described below. The charging ports 311 to 315 for respective inks supply the inks A to E to the supply pipes, which are continuous with the internal charging port 307 by means of air, for example. The inks A to E thus fed from the supply pipes are supplied to the coupling member 306 of the application head 301. Since the supply pipes are arranged in a row at the coupling portion 306a of the coupling member 306, the inks A to E to be charged into the internal charging port 307 from the coupling portion 306a are charged in a state arranged along the longer side of the internal charging port 307 (Fig. 12). By the supplying pressure of the following inks A to E, the inks A to E flow through the flow path 308 and then are injected from the injection orifice 309. At this time, the inks A to E maintain the order in which they have been arranged at the time of their charging into the internal charging port 307, namely the multi-layered structure in parallel with the longitudinal direction of the slit-shaped injection orifice 309, changes its sectional shape to meet the sectional shape of the flow path 308, and reaches the injection orifice 309. The layered structure of the inks A to E flowing within the flow path 308 at this time is shown in Fig. 12.

As shown in Fig. 12, the inks A to E in a section 320 of the internal charging port 307 are arranged in a row along the longer side of the internal charging port 307. A section 321 at a position advanced toward the injection orifice 309 from the internal charging port 307 is changed to meet the shape of a flow path section of the flow path 308 at that position while maintaining the layered structure of the inks A to E maintained. At this time, the sectional shapes of the layers comprising the respective inks A to E are changed at substantially equal rates. In a section 322, the sectional shapes of the layers comprising respective inks A to E begin to have a rectangular shape. In a section 323 at a position closer to the injection orifice 309, the sectional shape of the layers comprising the inks A to E becomes a shape as if rotated 90° from the section 322. In a section 324, the layers of the respective inks A to E are in a thinly laminated state. In a section 325 at the injection orifice 309, the layers of the respective inks A to E are in a laminated state with each layer having a thickness corresponding to the thickness of the layer to be formed on the substrate 303.

The injection orifice 309 injects the multi-layered inks A to E having the state of the aforementioned section 325 onto the substrate 303, which advances in the direction of arrow in Fig. 12, namely, in the direction perpendicular to the longitudinal direction of the slit-shaped injection orifice 309. Thus, the inks A to E are laminated on the substrate 303 in a multi-layered manner with each layer having a predetermined thickness, thereby achieving multi-layer application.

Fig. 13 is a schematic sectional view showing a MEA produced at this time. As shown in Fig. 13, the MEA obtained has layers of the respective inks A, B, C, D and E laminated sequentially.

By charging several desired kinds of the inks into the internal charging port 307 of the application head 301, it is possible to determine the number of layers to be injected from the injection orifice 309 arbitrarily. Accordingly, it is possible to vary the number of layers and the thickness of each layer suitably, efficiently and easily in the multi-layer application. Further, since plural kinds of inks are injected in a multi-layered manner from the single injection orifice 309, the number of layers can be increased without any limitation imposed by the number of orifices.

It should be noted that the present invention is not limited to the combination of the inks A to E described in the foregoing Example or to five kinds of inks. For example, it is possible to inject inks which are of a same kind but different in viscosity in a multi-layered manner.

Further, though the application head 301 in this Example is set so that the layers of the respective inks A to E have substantially equal thicknesses, it is possible to vary the thicknesses of layers to be applied by varying the sectional area of each of the inks A to E to be charged into the internal charging port 307.

Further, there is no limitation on the shape, size and the like of the internal charging port 307 and those of the injection orifice 309 described in this Example. For example, if the internal charging port and the injection orifice are made to have equal opening areas and, at the same time, the flow path therebetween is made to have a constant sectional area at any position, it is possible to determine the shape and size of the internal charging port and those of the injection orifice arbitrarily.

Multi-layer application was made on a substrate with the use of the aforementioned applicator under the following conditions and, as a result, multi-layer application with favorable interfaces of layers could be achieved.

Ink A: a diffusion layer ink comprising DENKA BLACK (acetylene black) produced by DENKI KAGAKU KOGYO KABUSHIKI KAISHA and LUBLON LDW-40 (PTFE dispersion, dry weight: 20 wt%) produced by DAIKIN INDUSTRIES, LTD.

Ink B: a catalyst layer ink comprising a catalyst carrying 50 wt% Pt on KETJEN BLACK EC that is a fine carbon powder produced by LION CORPORATION, an ethanol solution of perfluorocarbon sulfonic acid ionomer produced by Asahi Glass Co., Ltd., and 10 wt% of water.

Ink C: a 15 wt% electrolyte ink obtained by concentrating a 5 wt% Nafion solution produced by Aldorich Co. of United States.

Ink D: a catalyst layer ink comprising a catalyst carrying 40 wt% Pt and 20 wt% Ru on KETJEN BLACK EC that is a fine carbon powder produced by LION CORPORATION, an ethanol solution of perfluorocarbon sulfonic acid ionomer produced by Asahi Glass Co., Ltd., and 10 wt% of water.

Ink E: a diffusion layer ink comprising DENKA BLACK (acetylene black) produced by DENKI KAGAKU KOGYO KABUSHIKI KAISHA and LUBLON LDW-40 (PTFE dispersion, dry weight: 20 wt%) produced by DAIKIN INDUSTRIES, LTD.

Substrate: a 50 im-thick substrate composed of polypropylene (PP).

Substrate-conveying speed: 1 m/min

According to the foregoing Examples 3 and 4, a catalyst layer for positive electrode and a diffusion layer for positive electrode were formed on one side of a Nafion 112 membrane produced by Du Pont of United States and a catalyst layer for positive electrode and a diffusion layer for positive electrode were formed on the other side thereof to give a MEA, and a unit cell a was produced according to a conventional procedure with this MEA.

Further, with the application heads used in Examples 3 and 4 and Example 5 being configured to inject three kinds of coating compounds, two composites were produced each comprising diffusion layer and catalyst layer having same compositions as those formed in the Examples 3 and 4, and an electrolyte layer formed using a 15 wt% concentrated ink prepared from a 5 wt% Nafion solution produced by Aldorich of United States.

Thereafter, the two composites were joined together with their respective electrolyte layers lay on each other to give a MEA, which in turn was used to produce a unit cell b. Further, a unit cell c was produced using a MEA having five layers formed at the same time with the use of the application head used in Example 5.

### Comparative Example

For comparison, a diffusion layer ink was applied onto a substrate composed of PP with the use of an ink having the same composition as the diffusion layer ink used in Examples 3 to 5 and, then, dried to form a diffusion layer. Further, a catalyst layer ink was applied onto another substrate composed of PP and, then, dried to form a diffusion layer. Catalyst layers were transferred to the both sides of a Nafion 112 membrane produced by Du Pont of United States and, thereafter, diffusion layers for positive electrode and for negative electrode were transferred onto the opposite catalyst layers, respectively, to give a MEA for comparison. Subsequently, with the use of this MEA, a unit cell x was produced according to a conventional procedure.

Pure hydrogen gas and air, respectively, were supplied to the fuel electrode and the air electrode of each of the unit cells a, b, c and x according to the foregoing Examples 3 to 5 and Comparative Example, and the cell temperature, fuel gas utilization factor (U_{f}) and air utilization factor (Uₒ) were set to 75°C, 70% and 40%, respectively. The fuel gas was humidified by passing it through warm water at 65°C, while air was humidified by passing it through warm water at 60°C. A discharge test was conducted using each of the unit cells as a hydrogen-air fuel cell.

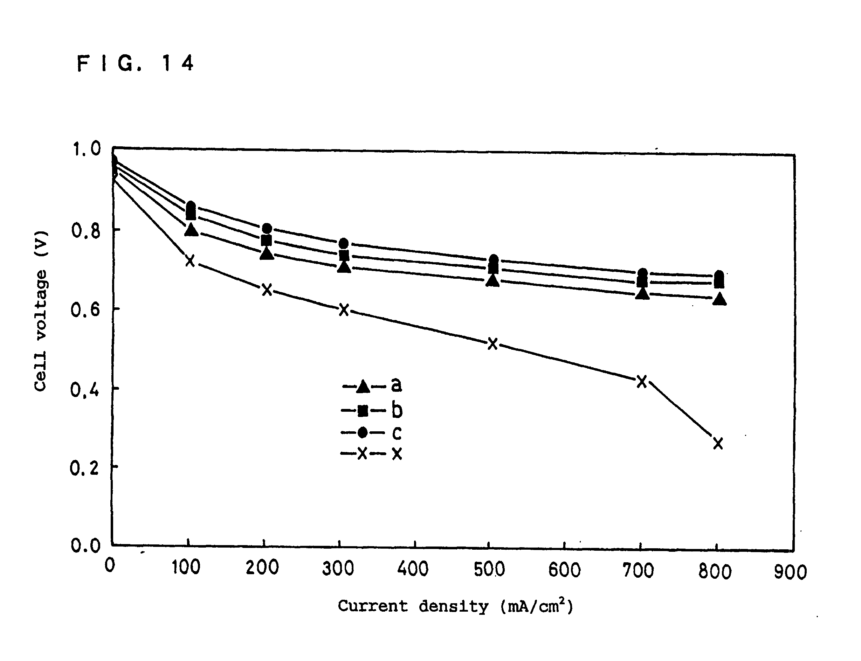

The discharge characteristic of each of the unit cells a, b, c and x were shown in Fig. 14. In terms of unit cell voltage at a current density of 300 mA/cm², the unit cells a, b, c and x exhibited voltages of 723 mv, 752 mV, 781 mV and 610 mV, respectively.

### Industrial Applicability

According to the present invention which produces a MEA on a substrate having a sufficient mechanical strength by, for example, casting a solution containing PFSI on the substrate such as of PET to form an electrolyte membrane and subsequently casting a catalyst layer, it is possible to make membranes forming respective layers very thin. The present invention makes it possible to reduce the amount of an electrolyte to be used, thereby realizing a cost reduction as well as to realize improved adhesion between the catalyst layer and the electrolyte membrane.

Also, the present invention makes it possible to simplify the production process for polymer electrolyte membrane, thereby reducing the production cost. It is also possible to enlarge the bonding interfaces between a polymer electrolyte membrane, a catalyst layer and a diffusion layer, whereby the proton resistance at the interface between the catalyst layer and the membrane decreases while the internal electronic resistance of the catalyst layer and diffusion layer decreases. Further, a cell according to the present invention has improved gas-diffusing ability and hence exhibits a higher discharge characteristic than a conventional cell.

Moreover, multi-layer application on a substrate can be achieved by causing two or more kinds of inks charged in a row to be injected in a multi-layered manner from an injection orifice. Therefore, by merely charging a required number of inks for desired multi-layer application in a row into a charging port, it is possible to perform multi-layer application efficiently without any limitation to the number of inks unlike the prior art.

It should be noted that besides hydrogen, it is possible to use hydrogen resulting from reforming of a fuel, or a fuel containing impurities such as carbon dioxide, nitrogen and carbon monoxide as a fuel. For example, use of a liquid fuel such as methanol, ethanol or dimethyl ether, or a mixture thereof will provide the same effect. Such a liquid fuel may be supplied either in a liquid state or as vapor resulting from previous vaporization.

Further, the present invention is not limited to the compositions of diffusion layer and electrolyte membrane in each of the foregoing Examples. For example, it is possible to use a product obtained from polymerization of a fluorine-type polymer or a hydrocarbon-type polymer, or a mixture thereof as an electrolyte.

Furthermore, a MEA provided by the present invention is applicable to a gas generator for generating gas such as oxygen, ozone or hydrogen, a gas purifier, and a variety of gas sensors such as an oxygen sensor and an alcohol sensor.

## Claims

1. A method for producing an electrolyte membrane electrode assembly comprising a hydrogen ion-conductive polymer electrolyte layer and a pair of electrode layers having respective catalyst layers facing opposite sides of said hydrogen ion-conductive polymer electrolyte layer,
said method comprising the steps of: (1) injecting an electrolyte ink comprising a dispersion containing a hydrogen ion-conductive polymer electrolyte or a melt liquid of a hydrogen ion-conductive polymer electrolyte to form an electrolyte layer; (2) injecting a catalyst layer ink to form a catalyst layer on said electrolyte layer; and (3) forming a diffusion layer on said catalyst layer, at least said step (1) and said step (2) being conducted sequentially or simultaneously.

2. The method for producing an electrolyte membrane electrode assembly in accordance with claim 1, wherein said step (1) and said step (2) are conducted sequentially or simultaneously to inject and apply said electrolyte ink and said catalyst layer ink in a multi-layered manner.

3. The method for producing an electrolyte membrane electrode assembly in accordance with claim 2, wherein said electrolyte ink and said catalyst layer ink are simultaneously injected in a multi-layered manner from a slit-shaped injection orifice, while said substrate is advanced in a direction perpendicular to a longitudinal direction of said slit-shaped injection orifice.

4. The method for producing an electrolyte membrane electrode assembly in accordance with any one of claims 1 to 3, wherein said step (3) is the step of injecting a diffusion layer ink on said catalyst layer to form the diffusion layer.

5. The method for producing an electrolyte membrane electrode assembly in accordance with claim 4, wherein said electrolyte ink, said catalyst layer ink and said diffusion layer ink are simultaneously injected in a multi-layered manner from a slit-shaped injection orifice, while said substrate is advanced in a direction perpendicular to a longitudinal direction of said slit-shaped injection orifice.

6. The method for producing an electrolyte membrane electrode assembly in accordance with any one of claims 1 to 4, wherein said step (3) is the step of forming the diffusion layer on said catalyst layer by hot pressing.

7. The method for producing an electrolyte membrane electrode assembly in accordance with any one of claims 1 to 6, including the step of baking an assembly of the electrolyte membrane and the catalyst layer obtained in said step (2) at a temperature not lower than 100°C.

8. A method for producing an electrolyte membrane electrode assembly comprising a hydrogen ion-conductive polymer electrolyte layer and a pair of electrode layers having respective catalyst layers facing opposite sides of said hydrogen ion-conductive polymer electrolyte layer,
said method comprising the steps of: (a) forming a catalyst layer containing a hydrogen ion-conductive polymer electrolyte on a substrate constituting an electrolyte layer; and (b) impregnating an assembly of the electrolyte membrane and the catalyst layer obtained in said step (a) with a dispersion or solution containing a hydrogen ion-conductive polymer electrolyte or a melt liquid of a hydrogen ion-conductive polymer electrolyte.

9. The method for producing an electrolyte membrane electrode assembly in accordance with claim 8, including the step of baking an assembly of said substrate and said catalyst layer at a temperature not lower than 100°C after said step (b).
